# EUROPÄISCHE PATENTSCHRIFT

(11) **EP 0 338 127 B1**
(45) Veröffentlichungstag und Bekanntmachung des Hinweises auf die Patenterteilung: **10.11.1993**
(21) Anmeldenummer: 88120548.8
(22) Anmeldetag: 08.12.1988
(51) Int. Cl.: H02M 7/48

(54) **Umrichter**
DC-AC converter
Onduleur

(30) Priorität: 08.12.1987 DE 3741595
(43) Veröffentlichungstag der Anmeldung: 25.10.1989
(73) Patentinhaber: Magnet-Motor Gesellschaft für magnetmotorische Technik mbH, D-82319 Starnberg (DE)
(72) Erfinder: Heidelberg,Götz,Dipl.-Phys., D-8136 Starnberg-Percha (DE); Gründl,Andreas,Dr., D-8000 München 70 (DE); Krömer,Joachim,Dr., D-8190 Wolfratshausen (DE)
(74) Vertreter: Klunker . Schmitt-Nilson . Hirsch

(56) Entgegenhaltungen:
- US-A- 3 593 039

## Beschreibung

Die Erfindung betrifft einen Umrichter nach dem Oberbegriff des Anspruchs 1.

In bestimmten Anwendungsfällen müssen Umrichter in der Lage sein, relativ hohe Gleichspannungen im Gleichspannungszwischenkreis zu verarbeiten. Die mit Leistungs-Halbleiterbauelementen, z.B. Thyristoren, bestückten Wechselrichter sind in der Regel deshalb sehr aufwendig, weil entsprechend den hohen Gleichspannungen in Gleichspannungszwischenkreis die Nennspannungen und die Nennisolationsspannungen der Halbleiterbauelemente gewisse Mindestwerte aufweisen müssen. Solche Bauelemente sind aber in aller Regel besonders teuer.

Zur Lösung dieses Problems ist es an sich bekannt, je nach den zu bewältigenden Spannungen und/oder Strömen mehrere steuerbare Halbleitergleichrichter in Reihe und/oder parallel zu schalten, wobei zusätzlich Maßnahmen zur gleichmäßigen Spannungs- und/oder Stromaufteilung auf die Halbleitergleichrichter vorzusehen sind (vgl. Silicon Controlled Rectifier Manual der General Electric, 3. März 1964, Seite 91-102).

Man kann nun aber auch daran denken, durch eine Serienschaltung von mehreren Wechselrichtern nach Art eines Spannungsteilers Teilspannungen der Gesamt-Gleichspannung zu verarbeiten, wobei die Teilspannungen jeweils niedriger sind als die Nennspannungen und Nennisolationsspannungen billiger, leicht verfügbarer Leistungs-Halbleiterbauelemente. Dem steht allerdings entgegen, daß z.B. bei Störungen in der Peripherie der Wechselrichter lokale Spannungserhöhungen auftreten, mit der Folge, daß die Nennspannungen der Halbleiterbauelemente beträchtlich überschritten werden.

Aus der US-A- 3 593 039 ist ein Umrichter bekannt, bei dem zwischen die Pole einer Hochspannungs-Wechselstromquelle mehrere jeweils gleich ausgebildete Thyristorschalter-Ebenen geschaltet sind. In jeder Ebene ist außer einem Haupt-Thyristor ein Hilfs-Thyristor mit in Reihe geschalteter Impedanz sowie ein ebenfalls zu dem Haupt-Thyristor parallelgeschalteter Spannungsteiler vorgesehen. Um eine zu hohe Belastung des jeweiligen Haupt-Thyristors bei dessen Ein- und Ausschalten zu vermeiden, wird zeitlich versetzt zunächst der Hilfs-Thyristor angesteuert, und anschließend wird durch den Haupt-Thyristor die Haupt-Stromlast geleitet. Das Auftreten lokaler Spannungsspitzen wird hierbei nicht berücksichtigt.

Der Erfindung liegt die Aufgabe zugrunde, einen Umrichter der eingangs genannten Art zu schaffen, der die Verwendung von Leistungs-Halbleiterbauelementen in der Wechselrichteranordnung gestattet, welche Nennspannungen und Nennisolationsspannungen besitzen, die kleiner sind als die Gesamtspannung im Gleichspannungszwischenkreis.

Diese Aufgabe wird bei einem Umrichter gemäß dem Oberbegriff des Anspruchs 1 mit den Merkmalen in seinem Kennzeichen gelöst.

In einer bevorzugten Ausführungsform der Erfindung ist vorgesehen, daß in jeder Wechselrichter-Ebene mindestens zwei zueinander eingangsseitig parallelgeschaltete Wechselrichter liegen, denen gemeinsam eine Widerstandsanordnung zugeordnet ist. Der Begriff "Wechselrichter-Ebene" bedeutet hier entweder einen einzelnen Wechselrichter oder eine Reihe von Wechselrichtern, deren einander entsprechende Eingangsanschlüsse auf etwa gleichem Potential liegen. Nach der genannten speziellen Ausführungsform der Erfindung, bei der innerhalb einer Wechselrichter-Ebene die einzelnen Wechselrichter eingangsseitig parallelgeschaltet sind, werden die einander entsprechenden Eingangsanschlüsse der Wechselrichter innerhalb jeder Ebene auf ein einheitliches Potential gelegt. Der Betrieb jedes einzelnen Wechselrichters oder der Wechselrichter einer Ebene wird derart gesteuert, daß in allen Ebenen eine gleichmäßige spannungsverteilung auf die Wechselrichter erfolgt. In Verbindung mit der Maßnahme, für jeweils eine Ebene eine gemeinsame Widerstandsanordnung vorzusehen, ergibt sich dabei der Vorteil, daß aufgrund der relativ geringen Anzahl von Widerstandsanordnungen eine kostensparende Schaltung möglich ist.

Eine etwas aufwendigere Lösung gemäß der Erfindung sieht vor, daß in jeder Wechselrichter-Ebene mindestens zwei Wechselrichter liegen, denen jeweils eine gesonderte Widerstandsanordnung zugeordnet ist. Bei dieser Ausgestaltung sind die einzelnen Wechselrichter innerhalb einer Ebene nicht eingangsseitig parallelgeschaltet, sondern die Wechselrichter bilden eine matrixförmige Anordnung, wobei die zu jeweils einer Spalte gehörigen Wechselrichter erfindungsgemäß in Serie geschaltet sind. Im Gegensatz zu der oben angesprochenen Variante ist bei dieser Ausführungsform für jeden Wechselrichter eine gesonderte Widerstandsanordnung vorgesehen. Dies hat zwar, wie gesagt, den Nachteil, daß die gesamte Schaltung aufwendiger wird, jedoch wird dadurch der Vorteil erkauft, daß bei eventuellem Ausfall einer Widerstandsanordnung innerhalb einer Ebene im Fehlerfall nicht die gesamte Ebene ausfällt, sondern die übrigen Teile innerhalb dieser Ebene weiterarbeiten können.

Sollten an einzelnen Wechselrichtern Spannungserhöhungen auftreten, so werden diese von einer Sensoreinrichtung erfaßt, und es wird dafür gesorgt, daß die Spannungserhöhungen lokal abgefangen werden. Hierzu sieht die Erfindung vor, daß die Widerstandsanordnung einen oder mehrere parallelgeschaltete Widerstände aufweist, die jeweils mit einem Schaltelement, z.B. einem GTO-Thyristor, in Reihe geschaltet sind, und daß die Schaltelemente von einem Steuerteil nach Maßgabe der von einer Sensoreinrichtung festgestellten Spannung an dem zugehörigen Wechselrichter-Eingang angesteuert werden. Je nach dem, wie stark die Spannungserhöhung an einem oder mehreren der Wechselrichter ausfällt, wird ein Widerstand oder werden mehrere Widerstände für bestimmte kurze Zeitspannen eingeschaltet, so daß die Spannungserhöhungen im Sinne einer Spannungskonstanthaltung abgefangen werden. Obschon ein GTO-Thyristor bevorzugt wird, ist auch die Verwendung eines Transistors, eines Thyristors mit externer Beschaltung oder eines anderen Bauelements vergleichbarer Funktion möglich.

Der Betrieb jedes einzelnen Wechselrichters wird derart gesteuert, daß eine gleichmäßige Spannungsverteilung auf die Wechselrichter einer Serienschaltung erfolgt. Eine solche Steuerung der einzelnen Wechselrichter ist z.B. sinnvoll, wenn an die Wechselrichter einzelne Polzähne oder einzelne Polzahn-Abschnitte eines Elektromotors oder Elektromagnet-Abschnitte eines Linearantriebs angeschlossen sind. In einem solchen Fall können die einzelnen Wechselrichter so gesteuert werden, daß unter anderem ein Maximal-Spannungswert vorgegeben wird, den der jeweilige Wechselrichter durch Regelung der Leistung einhält.

Im folgenden wird ein Ausführungsbeispiel der Erfindung anhand der Zeichnung näher erläutert. Es zeigen:
- Fig. 1: eine Schaltungsskizze eines Teils eines Umrichteranordnung, und
- Fig. 2: eine Skizze eines Teils eines in der Anordnung nach Figur 1 enthaltenen Wechselrichters.

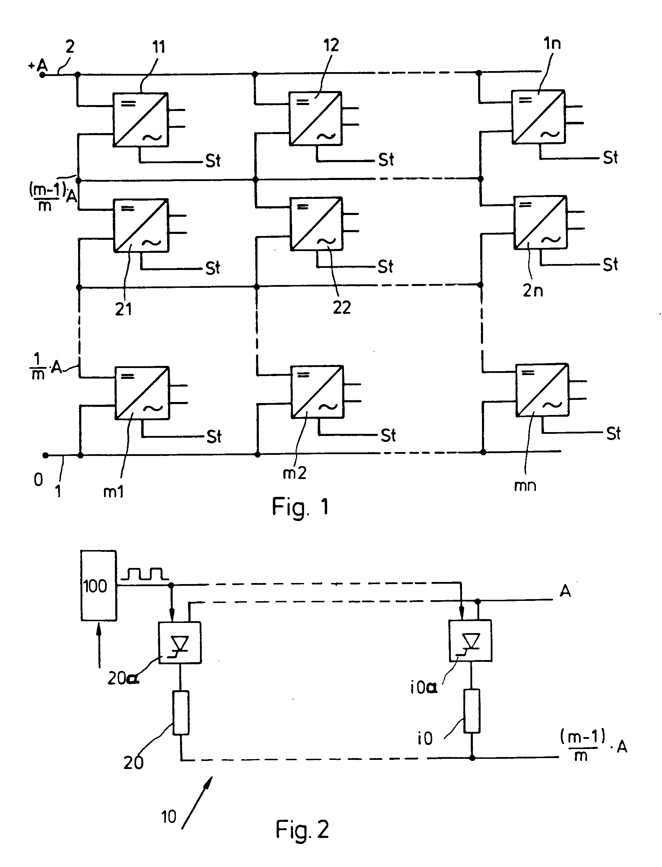

Figur 1 zeigt schematisch denjenigen Teil eines Umrichters, der auf die Gleichrichter-Anordnung folgt.

Das Potential auf einer Leitung 1 beträgt 0 Volt, das Potential auf einer Leitung 2 beträgt +A Volt. Aus dieser Gleichspannung bildet eine Wechselrichteranordnung mehrere Wechselspannungen, die in einer hier nicht näher dargestellten Schaltung benötigt werden. Beispielsweise kann an die Wechselrichteranordnung ein Elektromotor angeschlossen sein.

Gemäß Figur 1 umfaßt die Wechselrichteranordnung n Reihenschaltungen von jeweils m Wechselrichtern. Die am weitesten links in Figur 1 dargestellte Reihenschaltung umfaßt die Wechselrichter 11, 21, ... ml. Daran schließt die Reihenschaltung mit den Wechselrichtern 12, 22 ... m2 an. Die ganz rechts dargestellte Reihenschaltung umfaßt Wechselrichter 1n, ... mn.

Die in Figur 1 dargestellte Anordnung umfaßt also mehrere Spannungsebenen, wobei z.B. die oberste Spannungsebene die Wechselrichter 11, 12, ... 1n umfaßt. Um die einander entsprechenden Eingangsanschlüsse der Wechselrichter in den einzelnen Ebenen auf einheitliches Potential zu legen, sind die Wechselrichter in jeweils einer Ebene, zum Beispiel die Wechselrichter 11, 12, ... 1n in der obersten Ebene, und die Wechselrichter m1, m2 ... mn in der untersten Wechselrichter-Ebene elektrisch parallelgeschaltet, indem die einander entsprechenden Eingangsanschlüsse durch zu den Leitungen 1 und 2 parallellaufende Leitungen verbunden sind.

Die einzelnen Wechselrichter 11, 12, ... mn sind sämtlich identisch ausgebildet. Sämtliche Wechselrichter werden von einer hier nicht dargestellten Steuereinrichtung so angesteuert, daß die Teilspannungen an den einzelnen Wechselrichtern innerhalb jeweils einer Reihenschaltung gleich groß sind, wobei kurzzeitige Spannungserhöhungen von Widerständen abgefangen werden (s. Erläuterungen von Fig. 2). Die Wechselrichter empfangen über Steueranschlüsse St Steuersignale , und sie können auch Statussignale und andere Informationen an die genannte Steuereinrichtung abgeben.

Betrachtet man z.B. die in Figur 1 links dargestellte Reihenschaltung mit den Wechselrichtern 11, 12 ... ml, so zeigt sich, daß zwischen den beiden oberen Wechselrichtern 11 und 21 das Potential ((m-1)/m)x A beträgt. Das Potential verringert sich von Stufe zu Stufe. Am letzten Teilzwischenkreis beim Wechselrichter ml beträgt das Potential am oberen Eingang nur noch A/m. Aufgrund der Parallelschaltung
der Wechselrichter in den jeweiligen Wechselrichter-Ebenen herrschen die genannten Potential-Verhältnisse auch in den übrigen Spalten der matrixförmigen Wechselrichter-Anordnung, das heißt, an den oberen Eingangsanschlüssen
der Wechselrichter m2, ... mn liegt das gleiche Potential A/m wie am Wechselrichter ml.

Die in jedem der Wechselrichter enthaltenen Leistungs-Halbleiterbauelemente vertragen bestimmte Spannungen. Jedes Bauelement ist gekennzeichnet durch eine bestimmte Nennspannung und eine bestimmte Nennisolationsspannung, Aufgrund der oben beschriebenen Kaskadierung können in jedem Wechselrichter Bauelemente mit relativ niedriger Nennspannung und niedriger Nennisolationsspannung verwendet werden, da an jedem Teilzwischenkreis nur eine Teilspannung der zwischen den Anschlüssen 1 und 2 liegenden Gesamt-Gleichspannung anliegt.

Figur 2 zeigt eine Widerstandsanordnung 10, wie sie jeweils für eine Wechselrichter-Ebene, zum Beispiel die Ebene mit den Wechselrichtern 11, 12 ... 1n nach Figur 1 vorgesehen ist. Eine hier nicht dargestellte Sensoreinrichtung gibt an einen Steuerteil 100 ein Signal, welches kennzeichnend ist für die Teilspannung an dem betreffenden Wechselrichter. Bei nicht ausregelbaren Spannungsspitzen sorgt das Steuerteil 100 dafür, daß die erhöhte Spannung abgefangen wird. Hierzu ist eine Parallelschaltung aus mehreren Widerständen 20, 30, 40 ... vorgesehen. Diese Widerstände sind, wenn der Umrichter zum Steuern eines elektromotorischen Antriebs dient, Bremswiderstände. Jedem Widerstand 20, 30, 40 ... ist als Schaltelement ein GTO-Thyristor 20a, 30a, 40a ... zugeordnet. Die Steueranschlüsse der Schaltelemente 20a, 30a, 40a, sind mit dem Ausgang des Steuerteils 100 verbunden. Abhängig von der festgestellten Spannungserhöhung wird einer der Widerstände 20, 30, 40 ... oder werden mehrere Widerstände für bestimmte kurze Zeitspannen eingeschaltet.

Die Widerstandsanordnung kann auch nur einen einzigen Widerstand 20 mit zugehörigem Schalterelement 20a enthalten.

Bei dem oben beschriebenen Ausführungsbeispiel ist jeweils eine Widerstandsanordnung 10 für sämtliche Wechselrichter innerhalb einer Ebene vorgesehen. Bei der Schaltung nach Figur 1 sind mithin m Widerstandsanordnungen nötig.

Bei einer aufwendigeren Ausführungsform sind die Wechselrichter-Eingänge der jeweiligen Ebene nicht parallelgeschaltet. Das heißt: Gemäß Figur 1 fallen die die entsprechenden Eingangsanschlüsse der Wechselrichter in einer Ebene parallelschaltenden Leitungen zwischen den Leitungen 1 und 2 fort. Dazu ist jedem einzelnen Wechselrichter eine gesonderte Widerstandsanordnung 10 eingangsseitig zugeordnet. Bei m x n Wechselrichtern sind also auch m x n Widerstandsanordnungen vorgesehen. Dem Nachteil eines höheren Aufwands steht der Vorteil gegenüber, daß bei Ausfall einer Widerstandsanordnung innerhalb einer Ebene im Fehlerfall nicht die gesamte Ebene blockiert ist, sondern die übrigen Teil innerhalb dieser Ebene weiterarbeiten können.

## Patentansprüche

1. Umrichter, mit einem Gleichspannungszwischenkreis und einer daran angeschlossenen, mit Leistungs-Halbleiterbauelementen bestückten Wechselrichteranordnung, die mehrere in Serie geschaltete Wechselrichterebenen (11,12,13 ... 1n;21,22 ...; ...;ml ...,mn) aufweist, von denen jede mindestens einen Wechselrichter (11;21;m1) enthält,
**dadurch gekennzeichnet,**
daß jeder Wechselrichter oder jede Ebene derart gesteuert wird, daß eine gleichmäßige Spannungsaufteilung auf die Wechselrichter einer Serienschaltung erfolgt und daß jede Wechselrichter-Ebene eine parallel zum Wechselrichtereingang geschaltete Widerstandsanordnung (10) aus einem oder mehreren, parallel geschalteten Widerständen (20,30, ...) besitzt, durch die zusätzlich zur Wechselrichtersteuerung eine Steuerung auf gleichmäßige Spannungsverteilung hinsichtlich beispielsweise Spannungsspitzen auf die Wechselrichter-Eingänge einer Serienschaltung erfolgt, indem zu den einzelnen Widerständen in Reihe geschaltete Schalterelemente nach Maßgabe der von einer Sensoreinrichtung festgestellten Spannung an dem zugehörigen Wechselrichter-Eingang von einem Steuerteil (100) angesteuert werden.

2. Umrichter nach Anspruch 1,
**dadurch gekennzeichnet,**
daß in jeder Wechselrichter-Ebene mindestens zwei zueinander eingangsseitig parallelgeschaltete Wechselrichter (z.B. 11,12, ...) liegen, denen gemeinsam eine Widerstandsanordnung (10) zugeordnet ist.

3. Umrichter nach Anspruch 1,
**dadurch gekennzeichnet,**
daß in jeder Wechselrichter-Ebene mindestens zwei Wechselrichter liegen, denen jeweils eine gesonderte Widerstandsanordnung (10) zugeordnet ist.

4. Umrichter nach Anspruch 1, 2 oder 3,
**dadurch gekennzeichnet,**
daß die Schalterelemente jeweils als GTO-Thyristor ausgebildet sind.

## Claims

1. A current converter comprising a d.c. intermediate circuit and an inverter arrangement connected thereto and equipped with power semiconductor components and having a plurality of series-connected inverter planes (11, 12, 13, ... 1n; 21, 22, ...; ...; m1 ... mn) containing at least one inverter (11; 21; m1) each,
characterized in that each inverter or each plane is controlled such that a uniform voltage distribution to the inverters of a series connection is effected and that each inverter plane has a resistor arrangement (10) connected in parallel to the inverter input and having one or several resistors (20, 30, ...) connected in parallel, by means of which in addition to the inverter control a control operation aiming at a uniform voltage distribution to the inverter inputs of a series connection with respect to, for example, voltage peaks is effected in that switch elements connected in series with the individual resistors are controlled by a control member (100) in accordance with the voltage at the associated inverter input as detected by a sensor means.

2. A current converter according to claim 1,
characterized in that each inverter plane contains at least two inverters (e.g. 11, 12, ...) connected in parallel to each other on the input side thereof and having a resistor arrangement (10) commonly associated therewith.

3. A current converter according to claim 1,
characterized in that each inverter plane contains at least two inverters each having a separate resistor arrangement (10) associated therewith.

4. A converter according to claim 1, 2 or 3,
characterized in that the switch elements are each provided in the form of a GTO thyristor.

## Revendications

1. Onduleur comportant un circuit intermédiaire à tension continue et un agencement de convertisseurs équipé d'éléments semi-conducteurs de puissance, qui comprend plusieurs plans de convertisseurs (11, 12, 13 ... 1n; 21, 22 ...; ...;m1 ..., mn) montés en série, dont chacun contient au moins un convertisseur (11; 21; m1),
caractérisé en ce que
chaque convertisseur ou chaque plan est commandé de manière qu'ait lieu une répartition régulière de la tension sur les convertisseurs d'un montage série et que chaque plan de convertisseurs comprend un agencement de résistances (10) monté en parallèle à l'entrée des convertisseurs et constitué par une ou plusieurs résistances (20, 30, ...) montées en parallèle, par laquelle a lieu, outre la commande des convertisseurs, une commande de la répartition régulière de la tension concernant par exemple des pointes de tension aux entrées des convertisseurs d'un montage série, des éléments de commutation montés en série par rapport aux résistances individuelles étant excités par un élément de commande (100) en proportion de la tension détectée par un dispositif détecteur à l'entrée du convertisseur associé.

2. Onduleur selon la revendication 1, caractérisé en ce que dans chaque plan de convertisseurs sont au moins disposés deux convertisseurs (par exemple 11, 12, ...) montés en parallèle sur le côté entrée, auxquels est associé en commun un agencement à résistances (10).

3. Onduleur selon la revendication 1, caractérisé en ce qu'au moins deux convertisseurs sont disposés dans chaque plan de convertisseurs, auxquels est respectivement associé un agencement de résistances particulier (10).

4. Onduleur selon la revendication 1, 2 ou 3, caractérisé en ce que les éléments de commutation sont constitués respectivement par des thyristors blocables.
